# EUROPEAN PATENT APPLICATION

(11) **EP 1 337 109 A1**
(43) Date of publication of application: **20.08.2003**
(21) Application number: 02075525.2
(22) Date of filing: 07.02.2002
(51) Int. Cl.: H04N 7/01, G06T 3/40, H04N 5/44

(54) **Method and device for picture scaling**

(71) Applicant: Koninklijke Philips Electronics N.V., 5621 BA Eindhoven (NL)
(72) Inventor: Van Lammeren, Johannes Petrus Maria, 5656 AA Eindhoven (NL)
(74) Representative: Steenbeek, Leonardus Johannes

(57) **Abstract**

In a method and a device for scaling a picture having a first aspect ratio for display on a screen (D) having a second aspect ratio, the picture is divided into a plurality of segments, and each segment is processed (LM1,LM2) in accordance with a scaling algorithm that differs from a scaling algorithm applied to a neighboring segment.

## Description

Displaying 4:3 pictures on a 16:9 TV (or vice-versa) poses the TV designer with a problem: does he accept distortion by stretching the picture horizontally (or vertically) to fit the screen, or does he place black bars at both left- and right-hand sides (or top and bottom) of the picture. The last option gives an undistorted picture, but leaves part of the screen unused. As a compromise TV set-makers therefore often also make a mode in which the picture is filling the whole screen, but in such a way that the picture is nearly undistorted in the center, while sides are quite heavily distorted.

The scaling function can be made by either modulating the horizontal deflection or in the video path. As the deflection is a high-power circuit, relatively expensive components are needed to introduce scaling through this path. Therefore there is a growing interest in scaling through the video path.

US 5,506,625 provides a video signal conversion method for displaying a video signal having a 4:3 aspect ratio on a screen having a 16:9 aspect ratio by using a single clock. The video signal conversion comprises the steps of inserting two zero pixels between two pixels of the 4:3 video signal, band pass filtering the two pixels of the 4:3 video signal, such that 3/4 of the bandwidth of the pixels is passed and upper and lower parts of pixels are not passed, and sampling the filtered pixels by every fourth transition of a clock signal, and then displaying the sampled pixels on the 16:9 screen. The bandpass filter can be realized by using a filter having 13 filtering counts (taps).

US 5,734,434 (Attorneys' docket PHN 15.301) discloses a non-linear aspect ratio adaptation in which an adaptation of an aspect ratio of a picture signal is effected by providing a second derivative of an expansion factor in response to at least one constant value, by providing a first derivative of the expansion factor in response to the second derivative, by providing the expansion factor in response to the first derivative, and by expanding the picture signal in dependence upon the expansion factor to adapt the aspect ratio of the picture signal, whereby use of an expansion factor less than one results in a compression of said picture signal. The aspect ratio adapting circuit may include an interpolation circuit to effect a sample rate conversion in dependence upon the expansion factor. In a preferred embodiment of an aspect ratio adapting circuit, a compression factor is applied to a first input of an adder, whose output is connected to its second input thru a register. The combination of adder and register is commonly called a discrete time oscillator (DTO). The output of the register furnishes a desired delay delta, i.e., the interpolation position of an output pixel with regard to the positions of the input samples. It is strongly preferred that the delay delta has a sub-pixel accuracy. The delay delta is applied to a variable phase delay circuit which receives the processed television signal from the processing circuit and which furnishes the display signal to the display device. Variable phase delay circuits are known as such from US 5,349,548 (Attorneys' docket PHN 14,108) and US 5,625,581 (Attorneys' docket PHN 14,676).

It is, inter alia, an object of the invention to provide a picture scaling with a very simple sample-rate conversion. To this end, the invention provides a picture scaling as defined in the independent claims. Advantageous embodiments are defined in the dependent claims. These and other aspects of the invention will be apparent from and elucidated with reference to the embodiments described hereinafter.

In the drawings:
Fig. 1 shows an embodiment of a display apparatus in accordance with the present invention, comprising a basic circuit for non-linear scaling in accordance with the present invention;
Fig. 2 illustrates a non-linear scaling of a 4:3 picture on a 16:9 display; and
Fig. 3 illustrates a non-linear scaling of a 16:9 picture on a 4:3 display.

The following description sets out a method to perform horizontal scaling in the video path. Full-blown scalers, i.e. scalers that can perform both linear and flexible non-linear scaling require sample rate converters and are thus rather costly. The proposed method uses only the original pixels. By placing or skipping them a fixed (non-)linear scaling function can be made. The performance is not as high as full-blown scalers, but the circuit area is much smaller.

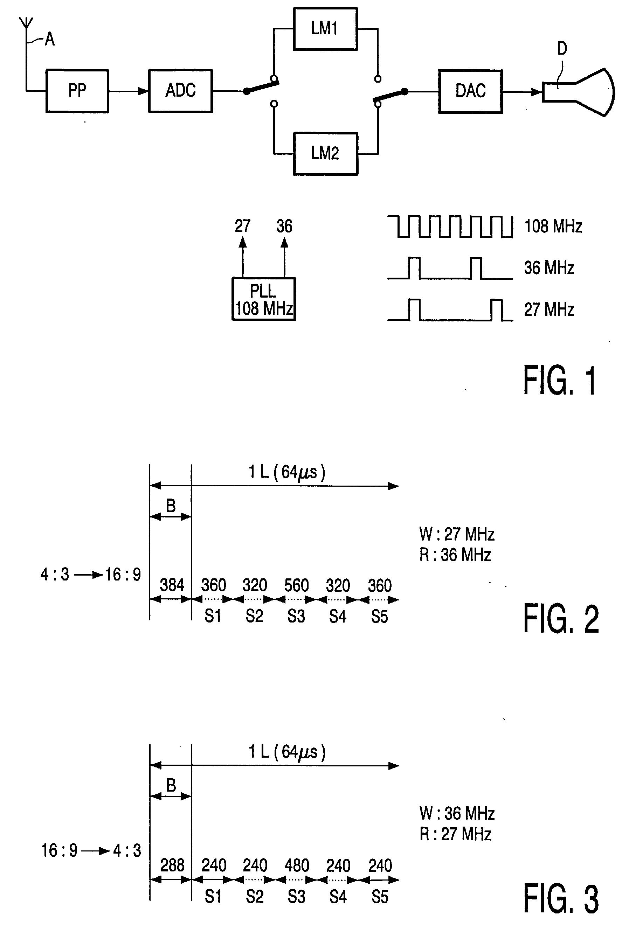

In Fig. 1, a signal from an antenna A is processed by a picture processing circuit PP. The output signal from the picture processing circuit PP is applied to an A/D converter ADC. Data from the ADC is written to one line memory (LM1 or LM2), while data is read from another line memory (LM2 or LM1). The line memories LM1, LM2 alternate between write and read modes. Both memories LM1, LM2 can be combined into one memory with controller, but for simplicity two are shown here. In scaling mode the write and read frequencies are different. To avoid cross-talk between the frequencies, they are derived from a common harmonic. As in scaling mode the write and read frequencies are not identical, the number of available pixels is either higher or lower than the number of pixels that has to be displayed. The difference is taken care of by either skipping pixels, filling in "black" pixels, or displaying them twice. The data read from the line memory LM1, LM2 is D/A converted by a DAC, and then displayed by a display D.

The circuit is clocked by a PLL operating at 108 MHz, from which two clocks are derived, viz. a 27 MHz clock and a 36 MHz clock. If additional pixels are generated, such as for a conversion from 4:3 to 16:9 as illustrated by Fig. 2, the 27 MHz clock is used for writing into the line memories LM1, LM2, while the 36 MHz clock is used for reading out the line memories LM1, LM2. If pixels are skipped, such as for a conversion from 16:9 to 4:3 as illustrated by Fig. 3, the 36 MHz clock is used for writing into the line memories LM1, LM2, while the 27 MHz clock is used for reading out the line memories LM1, LM2. The 27 and 36 MHz frequencies have been chosen to keep anti-alias and reconstruction filters simple. But the algorithm will work with other frequencies as well.

In accordance with a preferred embodiment of the present invention, illustrated by Fig. 2, the non-linear scaling mode is made by dividing the screen in five segments S1-S5. In addition to these 5 segments, a line (1 L of 64 µs) comprises a blanking period B. In the center segment S3 (one third of the screen, 560 pixels wide), the picture is stretched by a factor of 1.17 (i.e. 7 output pixels are generated from 6 original pixels by reading out each 6th pixel twice). On the both the left (S2) and the right (S4) of the center S3, one sixth of the screen (320 pixels wide) is stretched by a factor of 1.33 (i.e. 4 output pixels are generated from 3 input pixels by reading out each 3rd pixel twice). The remaining segments S1, S5 (360 pixels wide) on the far sides of the picture are stretched by a factor of 1.5 (i.e. 3 output pixels are generated from 2 input pixels by reading out each 2nd pixel twice). A 4:3 picture has 1440 visible pixels per line, while a 16:9 picture has 1920 visible pixels per line.

Instead of displaying a pixel twice, it is also possible to take the average of the two (original) pixels between which the new pixel is placed. This operation just requires bit-shifting and an adder. As no sample rate converters are needed in these two possibilities, both will result in a simple circuit with a small area.

Fig. 3 illustrates the reverse algorithm to display a 16:9 image on a 4:3 display: In the center segment S3' having 480 pixels, every 7th pixel is skipped, for the neighboring segments S2', S4' having 240 pixels, every 4th pixel is skipped, while for the 240 pixels at the edge segments S1', S5' of the screen, every 3rd pixel is skipped.

The above non-linear scaling algorithm can be generalized: control the read out of the line memories LM1,LM2 by a ROM that defines for each pixel whether it displays it, repeats the previous one, or skips it. This way any function to map a 4:3 picture on a 16:9 tube (or vice-versa) can be made.

The scaling circuit can also be used for the "double window" feature, i.e. video and TXT info next to each other on the TV screen. The same circuit as described above can be used. In DW mode the ADC writes the data to the memory with 27 MHz, while the DAC reads the data with 54 MHz. The 54 MHz can also easily be derived from the 108 MHz master clock. DW and scaling mode are never used simultaneously, so combining these functions in one circuit presents a cost-effective solution.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage.

## Claims

1. A method of scaling a picture having a first aspect ratio for display on a screen having a second aspect ratio, the method comprising:
dividing the picture into a plurality of segments (S1-S5, S1'-S5'); and
processing (LM1, LM2) each of said segments in accordance with a scaling algorithm that differs from a scaling algorithm applied to a neighboring segment.

2. A method as claimed in claim 1, wherein in a first segment out of said plurality of segments, an additional pixel is generated for each n existing pixels, while in a neighboring segment, an additional pixel is generated for each m existing pixels, with n being different from m.

3. A method as claimed in claim 1, wherein in a first segment out of said plurality of segments, one pixel is skipped out of each n existing pixels, while in a neighboring segment, one pixel is skipped for each m existing pixels, with n being different from m.

4. A device for scaling a picture having a first aspect ratio for display on a screen having a second aspect ratio, the device comprising:
means for dividing the picture into a plurality of segments (S1-S5, S1'-S5'); and
means for processing (LM1, LM2) each of said segments in accordance with a scaling algorithm that differs from a scaling algorithm applied to a neighboring segment.

5. A display apparatus, comprising:
means (PP) for furnishing a picture signal having a first aspect ratio;
a scaling device (LM1, LM2) as claimed in claim 4 to obtain a scaled picture; and
a display device (D) having a screen having a second aspect ratio for displaying the scaled picture.
